# EUROPÄISCHE PATENTSCHRIFT

(11) **EP 4 205 199 B1**
(45) Veröffentlichungstag und Bekanntmachung des Hinweises auf die Patenterteilung: **06.05.2026**
(21) Anmeldenummer: 22706276.7
(22) Anmeldetag: 11.02.2022
(51) Int. Cl.: H01M 8/0202, H01M 8/0258, H01M 8/04746, H01M 4/86

(54) **BIPOLARPLATTE MIT GENEIGT ANGEORDNETEN EINSTRÖMKANALABSCHNITTEN FÜR EINEN BRENNSTOFFZELLENSTAPEL, BRENNSTOFFZELLENSYSTEM UND KRAFTFAHRZEUG**
BIPOLAR PLATE HAVING INCLINED INFLOW DUCT PORTIONS FOR A FUEL CELL STACK, FUEL CELL SYSTEM AND MOTOR VEHICLE
PLAQUE BIPOLAIRE AYANT DES PARTIES DE CONDUIT D'ENTRÉE INCLINÉES POUR UN ASSEMBLAGE DE PILES À COMBUSTIBLE, SYSTÈME DE PILE À COMBUSTIBLE ET VÉHICULE À MOTEUR

(30) Priorität: 15.02.2021 DE 102021103436
(43) Veröffentlichungstag der Anmeldung: 05.07.2023
(73) Patentinhaber: AUDI AG, 85057 Ingolstadt (DE)
(72) Erfinder: KEITSCH, Oliver, 74076 Heilbronn (DE); LIPPL, Fabian, 68163 Mannheim (DE); SIEBEL, Armin, 74172 Neckarsulm (DE); VOIGT, Sebastian, 74074 Heilbronn (DE)
(74) Vertreter: Hentrich Patent- & Rechtsanwaltspartnerschaft mbB
(86) Internationale Anmeldenummer: PCT/EP2022/053336
(87) Internationale Veröffentlichungsnummer: WO 2022/171781

(56) Entgegenhaltungen:
- EP-A1- 1 942 546
- EP-A1- 2 299 527
- DE-A1- 102019 001 337
- US-A1- 2017 033 373

## Beschreibung

Die Erfindung betrifft eine Bipolarplatte für einen Brennstoffzellenstapel eines Brennstoffzellensystems mit wenigstens einem Hauptkanalabschnitt, der für die Zufuhr von einem Fluid eingerichtet ist; mehreren von dem Hauptkanalabschnitt abzweigenden Einströmkanalabschnitten; und mit mehreren mit den Einströmkanalabschnitten in Fluidverbindung stehenden Verteilkanalabschnitten.

Aus der DE 10 2019 001 337 A1 ist eine Separatorplatte für einen Brennstoffzellenstapel bekannt, bei der ausgangsseitige Ausströmkanalabschnitte, die mit einem Hauptkanal für die Abfuhr von einem Fluid verbunden sind, derart angeordnet sind, dass im Abfuhrhauptkanal eine strömungsbedingte Flüssigkeitsabscheidung erfolgen kann. Aus der CN 105839136 A ist eine kreisförmige Bipolarplatte bekannt, mit spiralförmig angeordneten Verteilkanälen.

In der US 2017 / 0 033 373 A1 wird eine Bipolarplatte für einen Brennstoffzellenstapel eines Brennstoffzellensystems beschrieben, bei der geneigt angeordnete Einströmkanalabschnitte vorliegen.

In der EP 2 299 527 A1 wird eine Bipolarplatte beschrieben, bei der die Einströmkanalabschnitte unter einem Anstellwinkel zur Erzeugung einer Drallströmung ausgerichtet sind.

Die EP 1 942 546 A1 beschreibt eine Bipolarplatte mit einer internen Verteilstruktur zur Erzeugung einer Drallströmung.

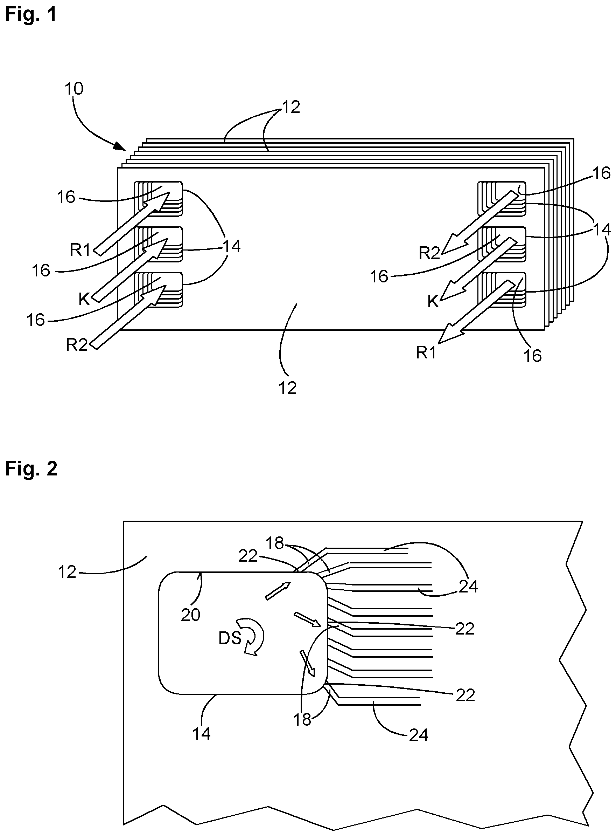

Die DE 10 2019 001 337 A1 beschreibt eine Separatorplatte für einen Brennstoffzellenstapel, wobei ausweislich der Figur 2 Einströmkanalabschnitte von wenigstens einem Teil der Umfangskontur des Hauptkanalabschnitts geneigt zu der orthogonalen zu einem Sammelkanalabschnitt geführt sind. Der Sammelkanalabschnitt ist parallel zu einer Seite des Hauptkanalabschnitts ausgerichtet und erstreckt sich nahezu über die gesamte Breite der Separatorplatte, um eine gleichmäßige Befüllung des entsprechend dimensionierten Flussfeldes zu ermöglichen.

In Brennstoffzellen werden zur Medienversorgung der elektrochemisch aktiven Flächen sogenannte Bipolarplatten verwendet. Die Bipolarplatten und elektrochemisch aktive Membraneinheiten werden abwechselnd zu sogenannten Brennstoffzellenstapeln zusammengebaut, um eine möglichst hohe Spannung durch Reihenschaltung der Einzelzellen zu erreichen. Die Verteilung der Reaktionsmedien (Reaktanden) auf die üblicherweise mehreren hundert Einzelzellen erfolgt dabei über eine alle Einzelzellen durchstoßende Öffnung (Hauptkanalabschnitt), welche zur Bildung eines Hauptkanals für das betreffende Medium bzw. den betreffenden Reaktanden führt. Von diesen Hauptkanälen ausgehend werden die üblicherweise drei Medien bzw. Fluide (zwei Reaktanden und ein Kühlmittel) über radial orientierte Öffnungen in Richtung des Aktivbereichs eingeleitet.

Der Hauptkanal muss aufgrund der aus wirtschaftlichen Gründen in gleicher Geometrie gefertigten Einzelzellen einen konstanten Querschnitt über seinen Verlauf besitzen. Daher ist die Einströmung von Fluid, insbesondere von Reaktanden in die ersten Einzelzellen des Stapels aufgrund der hohen Strömungsgeschwindigkeiten im Hauptkanal (am Anfang des Hauptkanals, wo der vollständige Massenstrom des betreffenden Fluids anliegt) meist sehr schlecht. Durch den konstanten Querschnitt des Hauptkanals ist eine Optimierung der Gleichverteilung von Fluid auf die verschiedenen Einzelzellen nur erschwert möglich.

Die der Erfindung zu Grunde liegende Aufgabe wird darin gesehen, eine Bipolarplatte anzugeben, bei der die Medien bzw. Fluide, insbesondere die Reaktanden, beim Einströmen bzw. bei der Zufuhr in die Brennstoffzelle bzw. den Brennstoffzellenstapel besser verteilt werden können.

Diese Aufgabe wird gelöst durch eine Bipolarplatte, ein Brennstoffzellensystem und ein Kraftfahrzeug mit den Merkmalen der jeweiligen unabhängigen Patentansprüche. Vorteilhafte Ausgestaltungen mit zweckmäßigen Weiterbildungen sind in den abhängigen Patentansprüchen angegeben.

Vorgeschlagen wird also eine Bipolarplatte für einen Brennstoffzellenstapel eines Brennstoffzellensystems mit wenigstens einem Hauptkanalabschnitt, der für die Zufuhr von einem Fluid eingerichtet ist; mehreren von dem Hauptkanalabschnitt abzweigenden Einströmkanalabschnitten; und mit mehreren mit den Einströmkanalabschnitten in Fluidverbindung stehenden Verteilkanalabschnitten. Dabei ist vorgesehen, dass die Einströmkanalabschnitte entlang von wenigstens einem Teil der Umfangskontur des Hauptkanalabschnitts derart angeordnet sind, dass jeder Einströmkanalabschnitt bezogen auf eine in einem jeweiligen Verbindungsbereich von Einströmkanalabschnitt und Hauptkanalabschnitt gedachte Orthogonale zu der dort vorhandenen Umfangskontur, geneigt zu dieser Orthogonalen ausgeführt ist, derart dass zwischen der Orthogonalen und einer Einströmkanalachse ein Anstellwinkel gebildet ist, wobei basierend auf der geneigten Anordnung der Einströmkanalabschnitte im Hauptkanalabschnitt eine Drallströmung für das einströmende Fluid erzeugbar ist.

Durch eine geneigte Anordnung der Einströmkanalabschnitte, die auch als quasi-tangentiale Ausrichtung der Einströmkanalabschnitte bezeichnet werden kann, kann der Strömung des betreffenden Fluids im Hauptkanal, der aus mehreren Hauptkanalabschnitten gebildet wird, ein leichter Drall auferlegt werden. Durch die Umlenkung hin zu einer Drallströmung kann dabei das Einströmen von Fluid in die ersten Zellen verbessert werden. Je nach Anstellwinkel der Einströmkanalabschnitte kann die Ausprägung des Dralls variiert werden, so dass hierdurch die Gleichverteilung in die Einzelzellen und der Druckverlust über den Hauptkanal optimiert werden. Durch die optimierte Gestaltung des Medieneintritts (geneigte Einströmkanalabschnitte) in die Bipolarplatte (Verteilkanalabschnitte) wird also im Hauptkanal eine Drallströmung erzwungen, welche den Medien-/Fluidfluss und die Gleichverteilung durch den Brennstoffzellenstapel verbessert.

Bei der Bipolarplatte sind die Einströmkanalabschnitte erfindungsgemäß entlang der gesamten Umfangskontur des Hauptkanalabschnitts verteilt. Hierdurch kann die in dem Hauptkanal erzeugte Drallströmung vollständig ausgenützt werden, um die Verteilung von Fluid in die Einströmkanäle und somit in die Einzelzellen zu verbessern.

Bei der Bipolarplatte können die Einströmkanalabschnitte in wenigstens einen Sammelkanalabschnitt münden, der mit den Verteilkanalabschnitten verbunden ist. Mittels eines solchen Sammelkanalabschnitts kann das aus dem Hauptkanal einströmende Fluid gleichmäßig auf die Verteilkanalabschnitte verteilt werden. Dabei kann sich der wenigstens eine Sammelkanalabschnitt entlang eines Teils der Umfangskontur des Hauptkanalabschnitts oder entlang der gesamten Umfangskontur des Hauptkanalabschnitts erstrecken.

Bei der Bipolarplatte kann der Anstellwinkel in einem Bereich von 10° bis 80°, insbesondere 20° bis 70° liegen. Dabei können die Anstellwinkel von einzelnen Einströmkanalabschnitten oder/und von Gruppen von Einströmkanalabschnitten in Abhängigkeit von ihrer Lage bezogen auf die Umfangskontur eingestellt bzw. gewählt werden. Hierdurch lässt sich die gewünschte Drallströmung im Hauptkanal erzeugen und beeinflussen.

Vorgeschlagen wird auch ein Brennstoffzellenstapel mit mehreren oben beschriebenen Bipolarplatten und mit mehreren, zwischen jeweils zwei benachbarten Bipolarplatten angeordneten Membraneinheiten, wobei die jeweiligen Hauptkanalabschnitte der Bipolarplatten einen durchgehenden Hauptkanal für ein Fluid des Brennstoffzellenstapels bilden.

Bei einem solchen Brennstoffzellenstapel kann der Hauptkanal mit einem eingangsseitig angeordneten Fluidzufuhrelement verbunden sein, wobei das Fluidzufuhrelement derart ausgebildet ist, dass die Strömung des Fluids vor oder beim Eintritt in den Hauptkanal zumindest anteilig zur Ausbildung einer Drallströmung veranlasst wird. Beispielsweise kann das Fluidzufuhrelement eine entsprechende Geometrie aufweisen oder/und wenigstens ein Strömungsleitelement aufweisen. Dabei kann das Strömungsleitelement bezogen auf eine Hauptströmungsrichtung von Fluid geneigt oder/und gekrümmt ausgebildet sein, so dass der Fluidstrom im Hinblick auf eine zu erzeugende Drallströmung abgelenkt wird bzw. werden kann.

Bei dem Brennstoffzellenstapel können zumindest die Hauptkanalabschnitte bzw. der jeweilige Hauptkanal für die Zuführung der Reaktanden, insbesondere Wasserstoff und Luft bzw. Sauerstoff, mit geneigten Einströmkanalabschnitten ausgeführt sein, so dass basierend auf der geneigten Anordnung der Einströmkanalabschnitte im jeweiligen Hauptkanal für den betreffenden Reaktanden eine Drallströmung für den einströmenden Reaktanden erzeugbar ist.

Ein Brennstoffzellensystem kann wenigstens einen oben beschriebenen Brennstoffzellenstapel aufweisen.

Ein Kraftfahrzeug, insbesondere ein zumindest teilweise elektrisch angetriebenes Kraftfahrzeug, kann mit einem solchen Brennstoffzellensystem ausgeführt sein bzw. ein solches aufweisen.

Weitere Vorteile und Einzelheiten der Erfindung ergeben sich aus der nachfolgenden Beschreibung von Ausführungsformen unter Bezugnahme auf die Figuren. Dabei zeigt:
- Fig. 1: eine vereinfachte und schematische Darstellung eines Brennstoffzellenstapels;
- Fig. 2: eine vereinfachte und schematische Darstellung einer Bipolarplatte mit Hauptkanalabschnitt und Einströmkanalabschnitten;
- Fig. 3: eine vereinfachte und schematische Darstellung einer Bipolarplatte mit Hauptkanalabschnitt, Einströmkanalabschnitten und Sammelkanalabschnitt;
- Fig. 4: eine vereinfachte und schematische, leicht vergrößerte Darstellung des Hauptkanalabschnitts zur Veranschaulichung des Anstellwinkels der Einströmkanalabschnitte;
- Fig. 5: vereinfachte und schematische Darstellungen der Anordnung von Einströmkanalabschnitten in einer oder/und zwei benachbarten Bipolarplatten;
- Fig. 6: eine vereinfachte und schematische Darstellung eines Brennstoffzellenstapels in einem Gehäuse mit einem Fluidzufuhrelement.

In Fig. 1 ist vereinfacht und schematisch ein Brennstoffzellenstapel 10 mit mehreren Bipolarplatten 12 dargestellt. In der Darstellung sind lediglich einige Bipolarplatten 12 gezeigt, wobei darauf hingewiesen wird, dass ein üblicher Brennstoffzellenstapel 10 viel mehr als die hier angedeutete Anzahl an Bipolarplatten 12 aufweist.

In den Bipolarplatten 12 sind jeweilige Hauptkanalabschnitte 14 ausgebildet. Durch die Aneinanderreihung der Bipolarplatten 12 wird durch eine Vielzahl von Hauptkanalabschnitten 14 ein jeweiliger Hauptkanal 16 im Brennstoffzellenstapel gebildet.

Beispielhaft ist in Fig. 1 ein Brennstoffzellenstapel 10gezeigt, mit eingangsseitigen Hauptkanälen 16 für zwei Reaktanden R1, R2 und ein Kühlmittel K, was durch die jeweiligen Pfeile illustriert ist.

Wie dies allgemein bekannt ist, werden in Brennstoffzellen zur Medienversorgung der elektrochemisch aktiven Flächen die Bipolarplatten 12 verwendet. Die Bipolarplatten 12 und elektrochemisch aktive Membraneinheiten, die nicht näher dargestellt sind, werden abwechselnd zum Brennstoffzellenstapel 10 zusammengebaut, um eine möglichst hohe Spannung durch Reihenschaltung der Einzelzellen zu erreichen. Die Verteilung der Reaktionsmedien R1, R2 (Reaktanden) auf die üblicherweise mehreren hundert Einzelzellen erfolgt dabei über eine alle Einzelzellen durchstoßende Öffnung (Hauptkanalabschnitt 14), welche zur Bildung des Hauptkanals 16 für das betreffende Medium bzw. den betreffenden Reaktanden R1, R2 führt. Von diesen Hauptkanälen 16 ausgehend werden die üblicherweise drei Medien bzw. Fluide (zwei Reaktanden R1, R2 und ein Kühlmittel K) über radial orientierte Öffnungen in Richtung des Aktivbereichs eingeleitet.

Fig. 2 zeigt in einer vereinfachten und schematischen Darstellung eine vergrößerte Teildarstellung einer Bipolarplatte 12 und eines eingangsseitigen Hauptkanalabschnitts 14. Der Hauptkanalabschnitt 14 dient also der Zufuhr von einem Fluid bzw. Reaktanden zu der Brennstoffzelle bzw. dem Brennstoffzellenstapel 10. Es kann sich dabei um einen Hauptkanalabschnitt 14 handeln, der zur Bildung des Hauptkanals 16 für den Reaktanden R1 dient. Was nachfolgend in Bezug auf den hier gezeigten Hauptkanalabschnitt 14 der Bipolarplatte 12 beschrieben wird, kann auch für andere Hauptkanalabschnitte 14 der gleichen Bipolarplatte 12 bzw. von weiteren Bipolarplatten 12 des Brennstoffzellenstapels 10 gelten. Es wird darauf hingewiesen, dass die nachfolgenden Ausführungen die Eingangsseite bzw. die Zufuhrseite des Brennstoffzellenstapels 10 bzw. der Bipolarplatten 12 betreffen.

Ausgehend von dem Hauptkanalabschnitt 14 erstrecken sich mehrere Einströmkanalabschnitte 18. Mittels der Einströmkanalabschnitte 18 wird durch den Hauptkanalabschnitt 14 strömendes Medium bzw. Fluid, insbesondere ein Reaktand R1, R2, dem nicht weiter dargestellten Aktivbereich der Brennstoffzelle zugeführt.

Die Einströmkanalabschnitte 18 sind entlang von wenigstens einem Teil der Umfangskontur 20 des Hauptkanalabschnitts 14 derart angeordnet, dass jeder Einströmkanalabschnitt 18 bezogen auf eine in einem jeweiligen Verbindungsbereich 22 von Einströmkanalabschnitt 18 und Hauptkanalabschnitt 14 gedachte Orthogonale zu der dort vorhandenen Umfangskontur, geneigt zu dieser Orthogonalen ausgeführt ist.

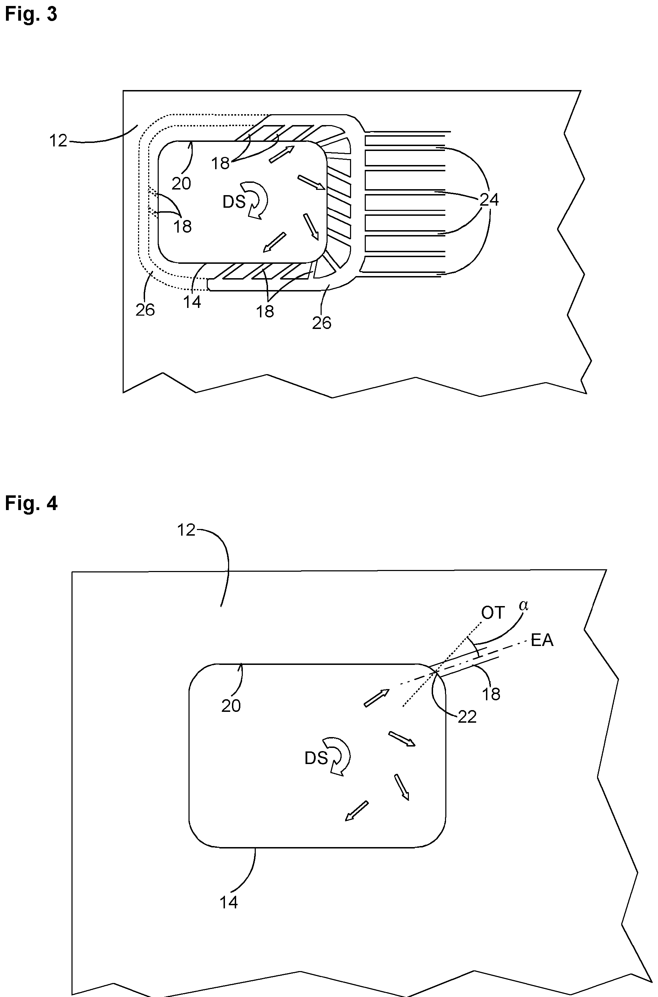

Dies ist beispielhaft für einen einzelnen Einströmkanalabschnitt 18 in der Fig. 4 etwas vergrößert dargestellt. Dabei ist der Einströmkanalabschnitt 18 bzw. sind alle Einströmkanalabschnitte 18 derart ausgebildet, dass zwischen der Orthogonalen OT und einer Einströmkanalachse EA ein Anstellwinkel α gebildet ist. Dabei kann basierend auf der geneigten Anordnung der Einströmkanalabschnitte 18 im Hauptkanalabschnitt 14 eine Drallströmung für das einströmende Fluid, insbesondere den Reaktanden R1, R2, erzeugt werden. Die Orthogonale OT im Verbindungsbereich kann bei einem gekrümmten bzw. gebogenen Verlauf der Umfangskontur 20 auch als Radialrichtung verstanden werden. Der Anstellwinkel kann beispielsweise in einem Bereich von etwa 10° bis 80°, vorzugsweise etwa 20° bis 70° liegen.

Die Ausgestaltung der Umfangskontur 20 des Hauptkanalabschnitts 18 ist in hier in den Figuren 1 bis 5 beispielhaft als Rechteck mit abgerundeten Ecken dargestellt. Es wird allerdings darauf hingewiesen, dass dies lediglich eine mögliche Ausgestaltung ist. Die Anordnung der Einströmkanalabschnitte 18 unter einem Anstellwinkel kann aber beispielsweise auch bei einer kreisförmigen Umfangskontur umgesetzt werden. Dabei ist die angesprochene Orthogonale in jedem Verbindungsbereich die Radialrichtung des kreisförmigen Hauptkanalabschnitts 14. Selbstverständlich sind auch weitere geometrische Formen der Umfangskontur denkbar.

Die Erzeugung der Drallströmung DS ist in den Figuren 2 und 3 durch den gekrümmten Pfeil illustriert. Dabei wird die Drallströmung DS durch das nicht orthogonale bzw. nicht-radiale Ausrichten der Einströmkanalabschnitte 18 erreicht. Mitanderen Worten wird durch das Anordnen der Einströmkanalabschnitte 14 unter einem jeweiligen Anstellwinkel das Erzeugen einer Drallströmung DS in dem gesamten Hauptkanal 16 unterstützt. Durch die erzeugte Drallströmung DS wird eine verbesserte Verteilung des betreffenden Mediums bzw. Fluids, insbesondere Reaktanden R1, R2, erreicht, so dass das Fluid über die gesamte Länge des Hauptkanals 16 gleichmäßig verteilt zu den jeweiligen Aktivbereichen der einzelnen Brennstoffzellen geführt werden kann.

In Fig. 2 ist ein Beispiel dargestellt, bei dem die Einströmkanalabschnitte 18 direkt in Verteilkanalabschnitte 24 übergehen. In dem hier dargestellten Beispiel sind die Verteilkanalabschnitte 24 zumindest im Anschluss an die jeweiligen Einströmkanalabschnitte 18 im Wesentlichen parallel zueinander ausgeführt. Der weitere, hier nicht dargestellte Verlauf der Verteilkanalabschnitte 24 kann entsprechend gängiger Ausgestaltungen von Bipolarplatten ausgeführt sein.

In Fig. 3 ist ein Beispiel dargestellt, bei dem die Einströmkanalabschnitte 18 zunächst in einen Sammelkanalabschnitt 26 münden. Der Sammelkanalabschnitt 26 steht in Verbindung mit den Verteilkanalabschnitten 24. Wie aus der Fig. 3 ersichtlich, erstreckt sich der Sammelkanalabschnitt 26 entlang eines Teils der Umfangskontur 20 des Hauptkanalabschnitts 14. Alternativ kann ein Sammelkanalabschnitt 26 auch entlang der gesamten Umfangskontur 20 des Hauptkanalabschnitts 14 ausgeführt sein, was in Fig. ergänzend gestrichelt dargestellt ist. Mittels eines Sammelkanalabschnitts 26 kann das einströmende Fluid zusätzlich homogener bzw. gleichmäßiger auf die mehreren Verteilkanalabschnitte 24 verteilt und so den aktiven Bereichen der Brennstoffzellen zugeführt werden.

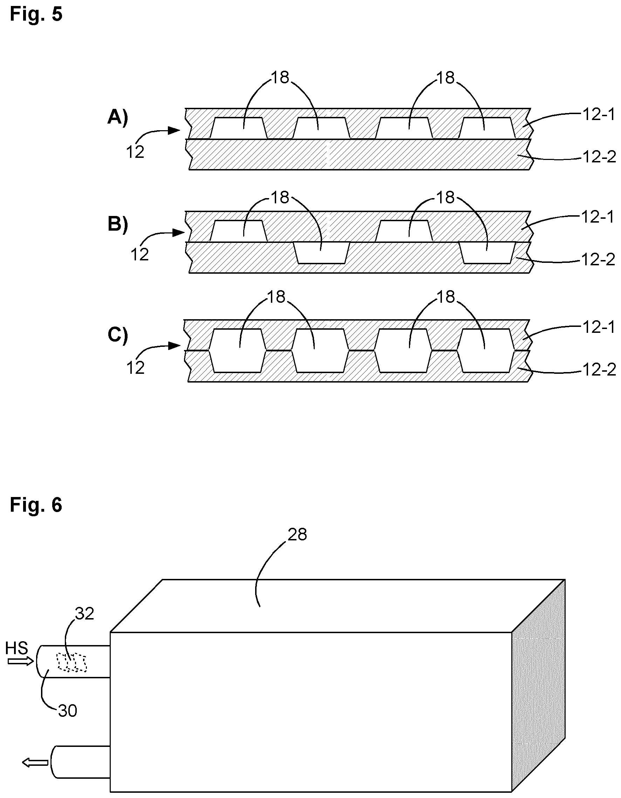

Fig. 5 zeigt in den Teilfiguren A) bis C) Beispiele von Bipolarplatten 12 mit verschiedenen Anordnungen der Einströmkanalabschnitte 18 in jeweiligen Bipolaplattenhälften 12-1, 12-2. Gemäß dem Beispiel in Fig. 5A sind alle Einströmkanalabschnitte 18 in der gleichen Bipolarplattenhälfte 12-1 ausgebildet. Gemäß dem Beispiel der Fig. 5B sind die Einströmkanalabschnitte 18 abwechselnd in den beiden Bipolarplattenhälfte 12-1, 12-2 ausgebildet. Gemäß dem Beispiel der Fig. 5C sind die Einströmkanalabschnitte 18 übereinander in beiden Bipolarplattenhälften 12-1, 12-2 ausgebildet, wodurch ein größerer Querschnitt der Einströmkanalabschnitte 18 gebildet werden kann.

Die in der Fig. 5 dargestellte trapezförmige Ausgestaltung der Einströmkanalabschnitte 18 ist rein beispielhaft. Die Einströmkanalabschnitte 18 oder/und die Verteilkanalabschnitte 24 oder/und ein Sammelkanalabschnitt 26 können auch eine andere Querschnittsform haben, beispielsweise halbkreisförmig oder rechteckig oder dergleichen.

Fig. 6 zeigt vereinfacht und schematisch einen nicht sichtbaren Brennstoffzellenstapel, der in einem Brennstoffzellengehäuse 28 aufgenommen ist. Beispielhaft ist bezogen auf die Figur 6 auf der linken Seite des Brennstoffzellengehäuses ein Fluidzufuhrelement 30 gezeigt, das mit einem nicht sichtbaren Hauptkanal für ein betreffendes Fluid bzw. einen betreffenden Reaktanden R1, R2 verbunden ist. Das Fluidzufuhrelement 30 ist dabei derart ausgebildet, dass die Strömung des Fluids bzw. des betreffenden Reaktanden vor oder beim Eintritt in den nicht sichtbaren Hauptkanal zumindest anteilig zur Ausbildung einer Drallströmung veranlasst wird. Beispielsweise kann das Fluidzufuhrelement 30 eine entsprechende Geometrie aufweisen oder/und wenigstens ein Strömungsleitelement 32 aufweisen. Dabei kann das Strömungsleitelement 32 bezogen auf eine Hauptströmungsrichtung HS von Fluid geneigt oder/und gekrümmt ausgebildet sein, so dass der Fluidstrom im Hinblick auf eine zu erzeugende Drallströmung abgelenkt wird bzw. werden kann. Es ist beispielsweise denkbar, dass entlang eines Innenumfangs des Fluidzufuhrelements 30 rippenartige Strukturen angeordnet sind zur Erzeugung einer Drallströmung. Es ist auch denkbar in dem Fluidzufuhrelement 30 ein zentral bzw. konzentrisch angeordnetes Strömungsleitelement 32 anzuordnen, das beispielsweise sich im Wesentlichen radial erstreckende Profilelemente aufweist, zur Erzeugung einer gewünschten Drallströmung.

Durch eine geneigte Anordnung der Einströmkanalabschnitte 18, die auch als quasi-tangentiale Ausrichtung der Einströmkanalabschnitte 18 bezeichnet werden kann, kann der Strömung des betreffenden Fluids bzw. Reaktanden R1, R2 im Hauptkanal 16, der aus mehreren Hauptkanalabschnitten 14 gebildet wird, ein leichter Drall auferlegt werden. Durch die Umlenkung hin zu einer Drallströmung kann dabei das Einströmen von Fluid in die ersten Brennstoffzellen verbessert werden. Je nach Anstellwinkel α der Einströmkanalabschnitte 18 kann die Ausprägung des Dralls variiert werden, so dass hierdurch die Gleichverteilung in die Einzelzellen und der Druckverlust über den Hauptkanal 16 optimiert werden. Durch die optimierte Gestaltung des Medieneintritts (geneigte Einströmkanalabschnitte 18) in die Bipolarplatte (Verteilkanalabschnitte 24) wird also im Hauptkanal 16 eine Drallströmung erzwungen, welche den Medien-/Fluidfluss und die Gleichverteilung durch den Brennstoffzellenstapel 10 verbessert.

Ein oben unter Bezugnahme auf die Fig. 1 bis 6 beschriebener Brennstoffzellenstapel 10 kann in einem zumindest teilweise elektrisch angetriebenen Kraftfahrzeug eingesetzt werden bzw. angebracht sein, insbesondere als Teil eines Brennstoffzellensystems des Kraftfahrzeugs.

## Patentansprüche

1. Bipolarplatte (12) für einen Brennstoffzellenstapel (10) eines Brennstoffzellensystems mit
wenigstens einem Hauptkanalabschnitt (14), der für die Zufuhr von einem Fluid (R1, R2, K) eingerichtet ist;
mehreren von dem Hauptkanalabschnitt (14) abzweigenden Einströmkanalabschnitten (18);
mehreren mit den Einströmkanalabschnitten (18) in Fluidverbindung stehenden Verteilkanalabschnitten (24);
wobei
die Einströmkanalabschnitte (18) entlang von wenigstens einem Teil der Umfangskontur (20) des Hauptkanalabschnitts (14) derart angeordnet sind, dass jeder Einströmkanalabschnitt (18) bezogen auf eine in einem jeweiligen Verbindungsbereich von Einströmkanalabschnitt (18) und Hauptkanalabschnitt (14) gedachte Orthogonale (OT) zu der dort vorhandenen Umfangskontur (20), geneigt zu dieser Orthogonalen (OT) ausgeführt ist, derart dass zwischen der Orthogonalen (OT) und einer Einströmkanalachse (EA) ein Anstellwinkel (α) gebildet ist, wobei basierend auf der geneigten Anordnung der Einströmkanalabschnitte (18) im Hauptkanalabschnitt (14) eine Drallströmung (DS) für das einströmende Fluid (R1, R2, K) erzeugbar ist, **dadurch gekennzeichnet, dass** die Einströmkanalabschnitte (18) entlang der gesamten Umfangskontur (20) des Hauptkanalabschnitts (14) verteilt sind.

2. Bipolarplatte (12) nach Anspruch 1, **dadurch gekennzeichnet, dass** die Einströmkanalabschnitte (18) in wenigstens einen Sammelkanalabschnitt (26) münden, der mit den Verteilkanalabschnitten (24) verbunden ist.

3. Bipolarplatte (12) nach Anspruch 2, **dadurch gekennzeichnet, dass** der wenigstens eine Sammelkanalabschnitt (26) sich entlang eines Teils der Umfangskontur (20) des Hauptkanalabschnitts (18) oder entlang der gesamten Umfangskontur (20) des Hauptkanalabschnitts (18) erstreckt.

4. Bipolarplatte (12) nach einem der vorhergehenden Ansprüche, **dadurch gekennzeichnet, dass** der Anstellwinkel (α) in einem Bereich von 10° bis 80° liegt.

5. Brennstoffzellenstapel (10) mit mehreren Bipolarplatten (12) gemäß einem der vorhergehenden Ansprüche und mit mehreren, zwischen jeweils zwei benachbarten Bipolarplatten (12) angeordneten Membraneinheiten, wobei die jeweiligen Hauptkanalabschnitte (14) der Bipolarplatten (12) einen durchgehenden Hauptkanal (16) für ein Fluid (R1, R2, K) des Brennstoffzellenstapels (10) bilden.

6. Brennstoffzellenstapel (10) nach Anspruch 5, **dadurch gekennzeichnet, dass** der Hauptkanal (16) mit einem eingangsseitig angeordneten Fluidzufuhrelement (30) verbunden ist, wobei das Fluidzufuhrelement (30) derart ausgebildet ist, dass die Strömung des Fluids (R1, R2, K) vor oder beim Eintritt in den Hauptkanal (16) zumindest anteilig zur Ausbildung einer Drallströmung (DS) veranlasst wird.

7. Brennstoffzellenstapel (10) nach Anspruch 5 oder 6, **dadurch gekennzeichnet, dass** zumindest die Hauptkanalabschnitte (14) bzw. der jeweilige Hauptkanal (16) für die Zuführung der Reaktanden (R1, R2), insbesondere Wasserstoff und Luft bzw. Sauerstoff, mit geneigten Einströmkanalabschnitten (18) ausgeführt sind, so dass basierend auf der geneigten Anordnung der Einströmkanalabschnitte (18) im jeweiligen Hauptkanal (16) für den betreffenden Reaktanden (R1, R2) eine Drallströmung (DS) für den einströmenden Reaktanden (R1, R2) erzeugbar ist.

8. Brennstoffzellensystem mit wenigstens einem Brennstoffzellenstapel (10) gemäß einem der Ansprüche 5 bis 7.

9. Kraftfahrzeug, insbesondere zumindest teilweise elektrisch angetriebenes Kraftfahrzeug, mit einem Brennstoffzellensystem gemäß Anspruch 8.

## Claims

1. Bipolar plate (12) for a fuel cell stack (10) of a fuel cell system having
at least one main channel portion (14) which is configured for the supply of a fluid (R1, R2, K);
multiple inflow channel portions (18) which branch off from the main channel portion (14);
multiple distributor channel portions (24) which are fluidically connected to the inflow channel portions (18);
wherein
the inflow channel portions (18) are arranged along at least a portion of the circumferential contour (20) of the main channel portion (14) in such a manner that each inflow channel portion (18) with respect to a notional orthogonal (OT) to the circumferential contour (20) provided at that location in a respective connection region of the inflow channel portion (18) and main channel portion (14) is constructed to be inclined with respect to this orthogonal (OT) such that between the orthogonal (OT) and an inflow channel axis (EA) an angle of attack (α) is formed, wherein based on the inclined arrangement of the inflow channel portions (18) a twisted flow (DS) can be produced in the main channel portion (14) for the incoming fluid (R1, R2, K), **characterized in that** the inflow channel portions (18) are distributed along the entire circumferential contour (20) of the main channel portion (14).

2. Bipolar plate (12) according to claim 1, **characterized in that** the inflow channel portions (18) open in at least one collection channel portion (26) which is connected to the distributor channel portions (24).

3. Bipolar plate (12) according to claim 2, **characterized in that** the at least one collection channel portion (26) extends along a portion of the circumferential contour (20) of the main channel portion (18) or along the entire circumferential contour (20) of the main channel portion (18).

4. Bipolar plate (12) according to any one of the preceding claims, **characterized in that** the angle of attack (α) is in a range from 10° to 80°

5. Fuel cell stack (10) having multiple bipolar plates (12) according to any one of the preceding claims and having multiple membrane units which are arranged between two adjacent bipolar plates (12) in each case, wherein the respective main channel portions (14) of the bipolar plates (12) form a continuous main channel (16) for a fluid (R1, R2, K) of the fuel cell stack (10).

6. Fuel cell stack (10) according to claim 5, **characterized in that** the main channel (16) is connected to a fluid supply element (30) which is arranged at the input side, wherein the fluid supply element (30) is constructed in such a manner that the flow of the fluid (R1, R2, K) before or upon entry into the main channel (16) is at least proportionally caused to form a twisted flow (DS).

7. Fuel cell stack (10) according to claim 5 or 6, **characterized in that** at least the main channel portions (14) or the respective main channel (16) are constructed for the supply of the reagents (R1, R2), in particular hydrogen and air or oxygen, with inclined inflow channel portions (18) so that based on the inclined arrangement of the inflow channel portions (18) in the respective main channel (16) for the relevant reagents (R1, R2) a twisted flow (DS) for the incoming reagents (R1, R2) can be produced.

8. Fuel cell system having at least one fuel cell stack (10) according to any one of claims 5 to 7.

9. Motor vehicle, in particular an at least partially electrically driven motor vehicle, having a fuel cell system according to claim 8.

## Revendications

1. Plaque bipolaire (12) pour un empilement de piles à combustible (10) d'un système de piles à combustible avec
au moins une section de canal principal (14) qui est conçue pour l'amenée d'un fluide (R1, R2, K) ;
plusieurs sections de canal d'admission (18) dérivant de la section de canal principal (14) ;
plusieurs sections de canal de distribution (24) se trouvant en liaison fluidique avec les sections de canal d'admission (18) ;
dans laquelle
les sections de canal d'admission (18) sont agencées le long d'au moins une partie du contour périphérique (20) de la section de canal principal (14) de telle manière que chaque section de canal d'admission (18) soit réalisée par rapport à une orthogonale (OT) imaginaire dans une zone de liaison respective de la section de canal d'admission (18) et de la section de canal principal (14) par rapport au contour périphérique (20) qui y est présent, inclinée par rapport à cette orthogonale (OT) de telle manière qu'un angle d'attaque (α) soit formé entre l'orthogonale (OT) et un axe de canal d'admission (EA), dans lequel un écoulement tourbillonnaire (DS) pour le fluide s'écoulant (R1, R2, K) peut être généré sur la base de l'agencement incliné des sections de canal d'admission (18) dans la section de canal principal (14), **caractérisée en ce que** les sections de canal d'admission (18) sont distribuées le long du contour périphérique (20) entier de la section de canal principal (14).

2. Plaque bipolaire (12) selon la revendication 1, **caractérisée en ce que** les sections de canal d'admission (18) débouchent dans au moins une section de canal de collecte (26) qui est reliée aux sections de canal de distribution (24).

3. Plaque bipolaire (12) selon la revendication 2, **caractérisée en ce que** la au moins une section de canal de collecte (26) s'étend le long d'une partie du contour périphérique (20) de la section de canal principal (18) ou le long du contour périphérique (20) entier de la section de canal principal (18).

4. Plaque bipolaire (12) selon l'une quelconque des revendications précédentes, **caractérisée en ce que** l'angle d'attaque (a) se trouve dans une plage de 10° à 80°.

5. Empilement de piles à combustible (10) avec plusieurs plaques bipolaires (12) selon l'une quelconque des revendications précédentes et avec plusieurs unités de membrane agencées entre respectivement deux plaques bipolaires (12) contiguës, dans lequel les sections de canal principal (14) respectives des plaques bipolaires (12) forment un canal principal (16) continu pour un fluide (R1, R2, K) de l'empilement de piles à combustible (10).

6. Empilement de piles à combustible (10) selon la revendication 5, **caractérisé en ce que** le canal principal (16) est relié à un élément d'amenée de fluide (30) agencé côté entrée, dans lequel l'élément d'amenée de fluide (30) est configuré de telle manière que l'écoulement du fluide (R1, R2, K) soit incité au moins proportionnellement à la configuration d'un écoulement tourbillonnaire (DS) avant ou lors de l'entrée dans le canal principal (16).

7. Empilement de piles à combustible (10) selon la revendication 5 ou 6, **caractérisé en ce qu'**au moins les sections de canal principal (14) ou le canal principal (16) respectif sont réalisées pour l'amenée des réactifs (R1, R2), en particulier de l'hydrogène et de l'air ou de l'oxygène, avec des sections de canal d'admission (18) inclinées de sorte qu'un écoulement tourbillonnaire (DS) puisse être généré pour les réactifs (R1, R2) admis sur la base de l'agencement incliné des sections de canal d'admission (18) dans le canal principal (16) respectif pour les réactifs (R1, R2) concernés.

8. Système de piles à combustible avec au moins un empilement de piles à combustible (10) selon l'une quelconque des revendications 5 à 7.

9. Véhicule automobile, en particulier véhicule automobile au moins partiellement électrique, avec un système de piles à combustible selon la revendication 8.
